# EUROPÄISCHE PATENTSCHRIFT

(11) **EP 3 681 797 B1**
(45) Veröffentlichungstag und Bekanntmachung des Hinweises auf die Patenterteilung: **10.04.2024**
(21) Anmeldenummer: 18769345.2
(22) Anmeldetag: 12.09.2018
(51) Int. Cl.: B64C 27/02, B64D 11/06, B64D 43/00, B60K 35/00, B60K 37/00, B60K 37/02, B60K 37/06

(54) **TRAGSCHRAUBER MIT EINEM ARMATURENBRETT**
AUTOGYRO HAVING AN INSTRUMENT PANEL
AUTOGIRE COMPRENANT UN TABLEAU DE BORD

(30) Priorität: 12.09.2017 DE 102017121072; 23.01.2018 DE 102018101412
(43) Veröffentlichungstag der Anmeldung: 22.07.2020
(73) Patentinhaber: Tensor AG, 86682 Genderkingen (DE)
(72) Erfinder: FRAUNDORFER, Christoph, 85128 Nasenfels (DE)
(74) Vertreter: Canzler & Bergmeier Patentanwälte Partnerschaft mbB
(86) Internationale Anmeldenummer: PCT/EP2018/074599
(87) Internationale Veröffentlichungsnummer: WO 2019/053058

(56) Entgegenhaltungen:
- EP-A2- 2 783 987
- CN-A- 105 314 099
- CN-A- 106 143 884
- US-A1- 2002 104 919
- US-A1- 2014 027 565

## Beschreibung

Die vorliegende Erfindung betrifft einen Tragschrauber nach dem beigefügten Anspruch 1 mit einem in Autorotation versetzbaren Rotor, mit einem Armaturenbrett, das zumindest eine Anzeigeeinheit und/oder zumindest eine Bedieneinheit aufweist, wobei das Armaturenbrett zumindest ein Sichtfenster zur Sichtfelderweiterung für einen Tragschrauberpiloten aufweist, dass durch eine im Armaturenbrett ausgebildete Aussparung ausgebildet ist, und mit einem vor dem Armaturenbrett angeordneten Pilotensitz.

Seit der Erfindung von Tragschraubern werden Armaturenbretter verwendet, um dem Piloten Flugparameter anzuzeigen und um Steuerungsmöglichkeiten des Fluggeräts bereitzustellen.

In der CN 105314099 A ist ein Drehflügler offenbart, welches vor einem Pilotensitz ein Armaturenbrett aufweist.

Aufgabe der vorliegenden Erfindung ist es somit, einen gegenüber dem Stand der Technik verbesserten Tragschrauber zu schaffen.

Die Aufgabe wird gelöst durch einen Tragschrauber mit den Merkmalen des unabhängigen Patentanspruchs.

Vorgeschlagen wird ein Tragschrauber mit einem in Autorotation versetzbaren Rotor, der einen Auftrieb für den Tragschrauber erzeugen kann. Ferner weist der Tragschrauber ein Armaturenbrett auf, das zumindest eine Anzeigeeinheit und/oder zumindest eine Bedieneinheit aufweist.

Das Armaturenbrett für den Tragschrauber weist zumindest eine Anzeigeeinheit auf. Das Armaturenbrett kann somit ein Tragschrauberarmaturenbrett sein. Das Armaturenbrett ist in einem vorderen Bereich eines Cockpits des Tragschraubers angeordnet. Ein Tragschrauberpilot sitzt vor dem Armaturenbrett im Cockpit, so dass der Pilot das Armaturenbrett und die Anzeigeeinheit stets im Blick hat. Mit Hilfe der Anzeigeeinheit können dem Tragschrauberpiloten Parameter des Tragschraubers und des Fluges mitgeteilt werden. Mittels einer Anzeigeeinheit können beispielsweise eine Flughöhe, eine Fluggeschwindigkeit, eine Steigrate und/oder eine Sinkrate angezeigt werden. Die Anzeigeeinheit kann beispielsweise ein digitales Display und/oder eine analoge Anzeige umfassen. Des Weiteren können mehrere Flugparameter beispielsweise mit einer einzigen Anzeigeeinheit, beispielsweise als Display, angezeigt werden.

Zusätzlich oder alternativ kann das Armaturenbrett auch zumindest eine Bedieneinheit aufweisen. Mit Hilfe der Bedieneinheit kann beispielsweise eine Frequenz eines Funkgeräts eingestellt werden.

Das Armaturenbrett weist zumindest ein Sichtfenster zur Sichtfelderweiterung für den Tragschrauberpiloten auf, das durch eine im Armaturenbrett ausgebildete Aussparung ausgebildet ist. Die Aussparung ist das Sichtfenster, durch den der Pilot die Umgebung des Tragschraubers beobachten kann. Dadurch ist eine Flugsicherheit erhöht, da die verdeckten Bereiche der Umgebung für den Piloten verringert sind.

Zusätzlich weist der Tragschrauber einen vor dem Armaturenbrett angeordneten Pilotensitz auf.

Ferner ist der Pilotensitz in Querrichtung des Tragschraubers zentral mittig vor dem Armaturenbrett positioniert. Dadurch hat der Pilot einen zentralen Blick auf das Armaturenbrett und kann alle Stellen des Armaturenbretts bequem erreichen.

Die Aussparung ist in Querrichtung des Armaturenbretts in einem Mittenbereich angeordnet, so dass dem Piloten eine Sicht nach vorne aus dem Tragschrauber möglich ist. Die Aussparung kann auch zentral mittig im Armaturenbrett angeordnet sein.

Vorteilhaft ist es, wenn sich die Aussparung vollständig durch das Armaturenbrett hindurcherstreckt. Dadurch kann die Größe des Sichtfensters vergrößert werden, um dem Piloten ein größeres Sichtfeld zu ermöglichen. Zusätzlich oder alternativ kann die Aussparung von einer die Anzeigeeinheit und/oder Bedieneinheit aufweisenden Vorderseite des Armaturenbretts bis zu einer gegenüberliegenden Rückseite des Armaturenbretts reichen. Dadurch kann auf einen Bereich hinter die Rückseite des Armaturenbretts geblickt werden.

Erfindungsgemäß erstreckt sich die Aussparung von einer Oberseite des Armaturenbretts ausgehend in Richtung einer Unterseite des Armaturenbretts.

Die Ober- und die Unterseite beziehen sich dabei auf die verwendungsgemäße Orientierung des Armaturenbretts im Tragschrauber. Der Pilot blickt beispielsweise über die Oberseite des Armaturenbretts hinweg nach vorne. Die Aussparung erstreckt sich somit von oben nach unten. Dadurch kann der Pilot durch die Aussparung hindurch blicken und die Bereiche vor dem Tragschrauber beobachten.

Zusätzlich oder alternativ weist die Aussparung im Bereich der Oberseite des Armaturenbretts eine obere Öffnung auf. Dadurch ist der Blick des Piloten nicht behindert.

In Beispielen, die nicht in den Umfang der Ansprüche fallen, kann sich zumindest eine Aussparung von einer Unterseite des Armaturenbretts in Richtung einer Oberseite des Armaturenbretts erstrecken. Dadurch kann steil nach unten vor den Tragschrauber geblickt werden. Dadurch kann beispielsweise ein Vorderrad des Tragschraubers beobachtet werden.

Außerdem erstreckt sich die Aussparung von der Oberseite ausgehend nur teilweise in Richtung der Unterseite, so dass das Armaturenbrett einen sich in Querrichtung des Armaturenbretts erstreckenden Verbindungsteil aufweist, der in der Vorderansicht einen linken und einen rechten Teil des Armaturenbretts miteinander verbindet. Dadurch kann das Armaturenbrett einteilig ausgebildet werden. Im Verbindungsteil können beispielsweise auch Kabel zur Übertragung von elektrischer Energie und/oder Kabel zur Kommunikation zwischen Anzeige- und/oder Bedieneinheiten des linken und rechten Teils angeordnet sein.

Vorteilhaft ist es, wenn das Armaturenbrett in einer Vorderansicht eine U-Form aufweist. Der linke Teil, der Verbindungsteil und der rechte Teil sind damit so angeordnet, dass das Armaturenbrett die U-Form aufweist.

In Beispielen, die nicht in den Umfang der Ansprüche fallen, kann sich die Aussparung von der Oberseite ausgehend vollständig bis zur Unterseite erstreckt, so dass die Aussparung im Bereich der Unterseite eine untere Öffnung aufweist. Dadurch ist der Blick des Piloten an der Unterseite des Armaturenbretts nicht behindert.

In solchen Beispielen können der linke und der rechte Teil des Armaturenbretts voneinander getrennt sein. Dadurch ist ein großes Blickfeld in vertikaler Richtung vom Piloten aus gegeben. Der Pilot kann dadurch von oben nach unten zwischen den beiden Teilen des Armaturenbretts frei hindurch blicken.

Von Vorteil ist es, wenn sich die Aussparung verjüngt. Dadurch kann ein Kompromiss zwischen einer Größe des Armaturenbretts und der Größe der Aussparung gefunden werden. Die Aussparung kann sich beispielsweise in Richtung der gegenüberliegenden Seite verjüngen.

Die Aussparung kann sich dabei auch von der Vorderseite in Richtung der Rückseite verjüngen. Die Aussparung kann sich aber auch von der Rückseite in Richtung der Vorderseite verjüngen.

Zusätzlich oder alternativ kann sich die Aussparung auch von der Oberseite in Richtung der Unterseite verjüngen. Alternativ kann sich die Aussparung auch von der Unterseite in Richtung der Oberseite verjüngen.

Die Aussparung kann sich auch konisch verjüngen.

Vorteilhaft ist es, wenn die Aussparung eine Breite von maximal 15 cm aufweist. Zusätzlich oder alternativ kann die Aussparung eine Tiefe von maximal 25 cm aufweisen. Dadurch weist die Aussparung eine ausreichende Größe auf, so dass der Pilot genug sieht.

Um das Armaturenbrett stabiler auszubilden, kann das Armaturenbrett im Bereich der oberen Öffnung einen sich zwischen dem linken und dem rechten Teil des Armaturenbretts erstreckende Versteifungsstrebe aufweisen. Zusätzlich oder alternativ kann sich auch eine Versteifungsstrebe im Bereich der unteren Öffnung vom linken zum rechten Teil erstrecken.

Vorteilhaft ist es, wenn die Versteifungsstrebe zumindest eine Anzeigeeinheit und/oder eine Bedieneinheit aufweist. Da die Versteifungsstrebe die Aussparung umrandet und der Pilot zumeist durch die Aussparung die Umgebung beobachtet, ist auch die zumindest eine Anzeigeeinheit im Blickfeld des Piloten. Wichtige Anzeigen, wie beispielsweise Flughöhe oder Fluggeschwindigkeit, können mittels der Anzeigeeinheit an der Versteifungsstrebe angezeigt werden, die der Pilot unmittelbar im Blick hat. Zusätzlich oder alternativ kann die Anzeigeeinheit und/oder die Bedieneinheit auch am Verbindungsteil angeordnet sein, so dass der Pilot die Anzeigeeinheit ebenfalls im Blick hat.

Von Vorteil ist es des Weiteren, wenn das Armaturenbrett zumindest abschnittsweise eine Blendschutzvorrichtung aufweist. Die Blendschutzvorrichtung kann dabei um die Anzeigeeinheit und/oder um die Bedieneinheit angeordnet sein, so dass eine Sonneneinstrahlung auf die Anzeigeeinheit und/oder die Bedieneinheit geblockt wird. Dadurch kann trotz Sonneneinstrahlung die Anzeigeeinheit und/oder die Bedieneinheit vom Piloten erkannt werden. Die Blendschutzvorrichtung kann dabei auch im Bereich der Aussparung um das Armaturenbrett angeordnet sein. Die Blendschutzvorrichtung kann beispielsweise als eine Blende ausgebildet sein, die am Armaturenbrett angeordnet ist und sich von diesem weg erstreckt. Bei vorgesehener Verwendung des Armaturenbretts im Tragschrauber erstreckt sich die Blendschutzvorrichtung in Richtung des Piloten bzw. des Pilotensitzes. Die Blendschutzvorrichtung ist dabei derart angeordnet, dass der Schatten der Blendschutzvorrichtung auf die Anzeigeeinheit und/oder die Bedieneinheit fällt und diese dadurch verdunkelt.

Um eine Größe des Armaturenbretts nicht zu sehr einzuschränken, kann das Armaturenbrett eine einzige Aussparung aufweisen.

Vorteilhaft ist es auch, wenn das Armaturenbrett zumindest eine Erweiterungseinheit aufweist. Die Erweiterungseinheit kann beispielsweise an der Unterseite des Armaturenbretts angeordnet sein. Die Erweiterungseinheit kann beispielsweise klappbar am Armaturenbrett angeordnet sein, so dass diese weggeklappt werden kann, wenn diese nicht benutzt wird. Die Erweiterungseinheit kann auch lösbar mit dem Armaturenbrett verbunden sein, so dass diese am Armaturenbrett angeschlossen und wieder entfernt werden kann. Das Armaturenbrett kann dazu eine Schnittstelle aufweisen, an der die Erweiterungseinheit angeschlossen werden kann. Die Erweiterungseinheit kann zusätzliche Anzeigeeinheiten und/oder Bedieneinheiten aufweisen, um zusätzliche Funktionen und/oder Parameter des Tragschraubers anzeigen zu können. Beispielsweise kann die Erweiterungseinheit ein GPS-Gerät sein.

Das GPS-Gerät kann am Armaturenbrett angeschlossen werden, um die Position des Tragschraubers am Armaturenbrett anzuzeigen.

Ebenfalls ist es von Vorteil, wenn eine Tiefe einer Aussparung des Armaturenbretts derart groß ist, dass ein Tragschrauberpilot des 50. Perzentils in einer Seitenansicht des Tragschraubers ausgehend von seinem Augenpunkt gegenüber einer sich durch den Augenpunkt erstreckenden Horizontalen einen vertikalen Sichtwinkel größer oder gleich 20° aufweist. 50. Perzentil bedeutet dabei, dass 50% der Tragschrauberpiloten eine größere Körpergröße und 50% der Tragschrauberpiloten kleinere Körpergröße aufweisen.

Durch den vertikalen Sichtwinkel von größer oder gleich 20°, kann der Pilot ausgehend von seinen Augen 20° oder weiter durch die Aussparung unter die Horizontale blicken. Er kann somit Ereignisse vor dem Tragschrauber sehen, die entsprechend nah vor dem Tragschrauber stattfinden.

Der vertikale Sichtwinkel kann aber auch größer oder gleich 25° sein. Dadurch kann der Pilot Ereignisse vor dem Tragschrauber sehen, die noch näher am Tragschrauber stattfinden.

Um dem Pilot eine noch bessere Sicht vor dem Tragschrauber zu ermöglichen, kann der vertikale Sichtwinkel auch 30° betragen.

Von Vorteil ist es, wenn neben dem Pilotensitz, der zentral mittig vor dem Armaturenbrett angeordnet ist, zumindest ein weiterer Sitz angeordnet ist. Der Sitz kann dabei links oder rechts neben dem Pilotensitz angeordnet sein. Zusätzlich kann auch ein Sitz links und ein Sitz rechts neben dem Pilotensitz angeordnet sein. Der Pilotensitz weist somit zu beiden Seiten einen weiteren Sitz auf. Neben dem Pilotensitz bedeutet hier natürlich, dass der zumindest eine Sitz in Querrichtung des Tragschraubers neben dem Pilotensitz angeordnet ist

Zusätzlich oder alternativ ist es vorteilhaft, wenn vom Armaturenbrett aus gesehen hinter dem Pilotensitz zumindest ein zusätzlicher Sitz angeordnet ist. Dabei können beispielsweise vom Armaturenbrett aus gesehen hinter dem Pilotensitz zumindest zwei oder mehr, beispielsweise drei, vier oder fünf, Sitze nebeneinander angeordnet sein. Hinter dem Pilotensitz kann auch eine Sitzbank für mehrere Personen angeordnet sein. Zusätzlich oder alternativ können auch zumindest drei Sitze in einer Reihe hintereinander, d.h. in Axialrichtung des Tragschraubers, angeordnet sein, wobei der vorderste bzw. der erste Sitz der Pilotensitz ist.

Der zumindest eine weitere Sitz kann beispielsweise dazu genutzt werden, um eine Gastperson zu befördern. Dieser zumindest eine weitere Sitz kann, insbesondere wenn dieser hinter dem Pilotensitz angeordnet ist, gegenüber dem Pilotensitz erhöht im Tragschrauber angeordnet sein, so dass die Aussicht für die Gastperson verbessert ist. Wenn der zumindest eine weitere Sitz hinter dem Pilotensitz angeordnet ist, befindet er sich vom Armaturenbrett aus gesehen hinter dem Pilotensitz. Der Pilotensitz ist somit zwischen dem Armaturenbrett und dem weiteren bzw. zusätzlichen Sitz angeordnet. Der zusätzliche Sitz kann ebenfalls in Querrichtung mittig vor dem Armaturenbrett angeordnet sein, wobei der Pilotensitz zwischen dem Armaturenbrett und dem zusätzlichen Sitz angeordnet ist. Der zusätzliche Sitz kann auch in Querrichtung mittig im Tragschrauber angeordnet sein. Das Armaturenbrett, der Pilotensitz und der zusätzliche Sitz können in Längsrichtung des Tragschraubers hintereinander angeordnet sein. Der zusätzliche Sitz befindet sich natürlich ebenfalls im Cockpit des Tragschraubers.

Der zumindest eine weitere Sitz kann auch ein Pilotensitz sein, wenn der Tragschrauber beispielsweise ein Übungstragschrauber ist, so dass ein Fluglehrer und ein Flugschüler den Tragschrauber steuern müssen. In dem zumindest einem weiteren Sitz bzw. Pilotensitz kann aber beispielsweise auch ein Copilot sitzen.

Hinter und/oder neben dem Pilotensitz kann zusätzlich oder alternativ auch ein Lagerraum zum Transport von Waren angeordnet sein.

Weitere Vorteile der Erfindung sind in den nachfolgenden Ausführungsbeispielen beschrieben. Es zeigen:
- **Figur 1**: eine schematische Seitenansicht eines Tragschraubers,
- **Figur 2**: eine schematische Draufsicht eines Armaturenbretts mit einer Aussparung,
- **Figur 3**: eine schematische Draufsicht eines Armaturenbretts mit einem Steg, der die Aussparung umrandet,
- **Figur 4**: eine schematische Draufsicht eines Armaturenbretts mit einer sich verjüngenden Aussparung,
- **Figur 5**: eine schematische Draufsicht eines Armaturenbretts mit zumindest einer Erweiterungseinheit,
- **Figur 6**: eine schematische Draufsicht eines Armaturenbretts mit einer mittig angeordneten Erweiterungseinheit,
- **Figur 7**: eine schematische Draufsicht eines Armaturenbretts, das nicht in den Umfang der Ansprüche fällt, mit einer Aussparung an einer Unterseite,
- **Figur 8**: eine schematische Draufsicht eines Armaturenbretts, das nicht in den Umfang der Ansprüche fällt, das zweigeteilt ist, und
- **Figur 9**: eine schematische Draufsicht eines Armaturenbretts mit zumindest einer Blendschutzvorrichtung.

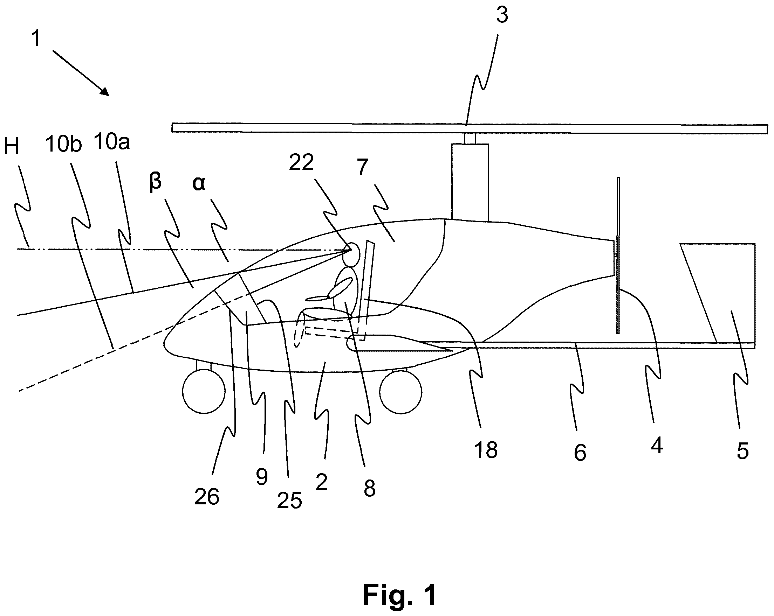

Figur 1 zeigt eine schematische Seitenansicht eines Tragschraubers 1. Der Tragschrauber 1 umfasst einen Rumpf 2, an dessen oberer Seite ein Rotor 3 angeordnet ist. Der Rotor 3 ist nicht von einem Motor angetrieben, sondern kann durch einen Fahrtwind des Tragschraubers 1 in Autorotation versetzt werden. Durch den in Autorotation versetzten Rotor 3 erhält der Tragschrauber 1 einen Auftrieb.

Um den Tragschrauber 1 in eine Vorwärtsfahrt zu versetzen, weist dieser im hinteren Bereich des Rumpfes 2 einen Propeller 4 auf, der von einem hier nicht gezeigten Motor angetrieben werden kann. In einem Bereich hinter dem Propeller 4 ist ein Leitwerk 5 angeordnet, das mittels einer Strebe 6 mit dem Rumpf 2 verbunden ist. Mit Hilfe des Leitwerks 5 kann der Tragschrauber 1 gesteuert werden.

In einem vorderen Bereich des Rumpfes 2 ist ein Cockpit 7 angeordnet, in dem ein Tragschrauberpilot 8 sitzen kann. Der Pilot 8 kann dabei in einem Pilotensitz 18 sitzen.

Im vorderen Bereich des Cockpits 7 ist ein Armaturenbrett 9 angeordnet, über das dem Pilot 8 Parameter des Tragschraubers 1 und Parameter des Fluges mitgeteilt bekommt. Zusätzlich oder alternativ kann der Pilot 8 mit dessen Hilfe den Tragschrauber 1 steuern. Das Armaturenbrett 9 ist dabei im Blickbereich des Piloten 8 angeordnet, so dass er die Anzeigen im Blick hat.

Das Armaturenbrett 9 weist eine dem Tragschrauberpiloten 8 zugewandte Vorderseite 25 auf. An der zur Vorderseite 25 gegenüberliegenden Seite weist das Armaturenbrett 9 eine Rückseite 26 auf.

Das Armaturenbrett 9 kann den Blick des Piloten 8 jedoch auch blockieren. Eine Blickrichtung 10a des Piloten 8 über das Armaturenbrett 9 hinweg ist nicht blockiert. Eine Blickrichtung 10b dagegen ist vom Armaturenbrett 9 blockiert. Die Blickrichtung 10a weist einen flacheren Sichtwinkel α als die Blickrichtung 10b auf, so dass im Gegensatz zur Blickrichtung 10b lediglich relativ weit vor den Tragschrauber 1 geblickt werden kann. Näher am Tragschrauber 1 stattfindende Ereignisse, die von der Blickrichtung 10b beobachtet werden könnten, sind vom Armaturenbrett 9 verdeckt.

Ausgehend vom Piloten 8 kann eine Horizontale H definiert werden, die parallel zum Untergrund des Tragschraubers 1 orientiert ist. Die Horizontale H kann von einem Augenpunkt 22 des Piloten 8 ausgehen. Zwischen der Horizontalen H und der Blickrichtung 10a kann der Sichtwinkel α angeordnet sein. Der Sichtwinkel α entspricht dabei dem Winkel, bei dem der Pilot 8 noch freien Blick vor den Tragschrauber 1 und unterhalb der Horizontalen H hat. Die Blickrichtung 10a verläuft unter dem Sichtwinkel α gerade noch über das Armaturenbrett 9 hinweg. Blickt der Pilot 8 weiter als der Sichtwinkel α nach unten, ist sein Blick durch das Armaturenbrett 9 blockiert. Zwischen der Horizontalen H und der Blickrichtung 10b kann des Weiteren der Sichtwinkel β angeordnet sein. Im vorliegenden Ausführungsbeispiel ist beim Sichtwinkel β die Sicht des Piloten 8 durch das Armaturenbrett 9 blockiert.

Vor dem Armaturenbrett 9 ist dabei ein Pilotensitz 18 angeordnet. Der Pilotensitz 18 ist in einer Querrichtung des Tragschraubers 1 mittig vor dem Armaturenbrett 9 angeordnet.

Der Tragschrauber 1 kann auch zumindest einen weiteren, hier nicht gezeigten, Sitz aufweisen, der im Cockpit 7 angeordnet ist. Beispielsweise kann dieser zumindest eine zusätzliche Sitz vom Armaturenbrett 9 aus gesehen hinter dem hier gezeigten Pilotensitz 18 angeordnet sein. Der zusätzliche Sitz kann ebenfalls in Querrichtung mittig vor dem Armaturenbrett 9, allerdings hinter dem Pilotensitz 18, angeordnet sein. Zwischen dem Armaturenbrett 9 und dem zusätzlichen Sitz ist der Pilotensitz 18 angeordnet. Das Armaturenbrett 9, der Pilotensitz 18 und der besagte zusätzliche Sitz können in Längsrichtung des Tragschraubers 1 hintereinander angeordnet sein.

Zusätzlich oder alternativ kann auch zumindest ein Sitz neben dem Pilotensitz 18 angeordnet sein.

Eine Person, die auf diesem zusätzlichen Sitz sitzt, kann dann zwar das Armaturenbrett 9 nicht erreichen, da der Pilotensitz 18 mit dem Piloten 8 dazwischen sitzt. Der zusätzliche Sitz kann aber dazu dienen, eine Gastperson zu befördern. Der zusätzliche Sitz kann ferner gegenüber dem Pilotensitz 18 erhöht angeordnet sein, so dass dadurch eine bessere Aussicht gegeben ist.

Beispielsweise können auf der zum Piloten 8 abgewandten Rückseite des Pilotensitzes 18 zumindest eine Anzeige- und/oder Bedieneinheit angeordnet sein. Mit Hilfe der Anzeigeeinheit kann die Gastperson auf dem zusätzlichen Sitz beispielsweise die Reiseroute, die Geschwindigkeit, Höhe etc. verfolgen. Mit Hilfe der Bedieneinheit kann die Gastperson beispielsweise die Reiseroute eingeben bzw. verändern.

Die Anzeige- und/oder Bedieneinheit kann beispielsweise an einer Lehne des Pilotensitzes 18 angeordnet sein.

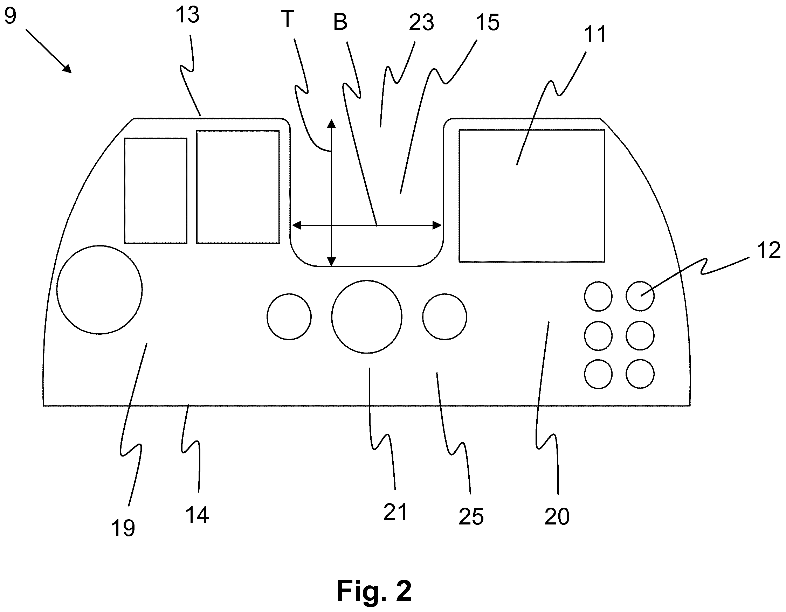

Figur 2 zeigt eine schematische Draufsicht auf das Armaturenbrett 9. Das Armaturenbrett 9 umfasst zumindest eine Anzeigeeinheit 11, wobei der Einfachheit halber lediglich eine Anzeigeeinheit 11 mit einem Bezugszeichen versehen ist. Mit Hilfe der Anzeigeeinheit 11 können Flugparameter und andere Information dem Piloten 8 angezeigt werden. Die Anzeigeeinheit 11 kann beispielsweise ein digitales Display umfassen, auf dem Grafiken angezeigt werden können. Die Anzeigeeinheit 11 kann aber auch eine analoge Anzeige umfassen.

Zusätzlich oder alternativ kann das Armaturenbrett 9 auch zumindest eine Bedieneinheit 12 umfassen, wobei der Einfachheit halber lediglich eine Bedieneinheit 12 mit einem Bezugszeichen versehen ist. Damit kann der Pilot 8 den Tragschrauber 1 steuern und/oder Regelbefehle eingeben. Mittels einer Bedieneinheit 12 kann der Pilot 8 beispielsweise eine Frequenz eines Funkgerätes einstellen. Zumindest die Bedieneinheit 12 sollte auf dem Armaturenbrett 9 derart angeordnet sein, dass diese vom Piloten 8 bequem während des Tragschrauberfluges erreichbar ist. Zusätzlich oder alternativ kann auch das Armaturenbrett 9 derart im Cockpit 7 angeordnet sein, dass der Pilot 8 alle Bedieneinheiten 12 und/oder Anzeigeeinheiten 11 erreicht. Durch die Orientierung der zumindest einen Anzeigeeinheit 11 weist das Armaturenbrett 9 eine Oberseite 13 und eine Unterseite 14 auf.

Die Anzeigeeinheit 11 und/oder die Bedieneinheit 12 sind auf der Vorderseite 25 des Armaturenbretts 9 angeordnet.

Um ein Sichtfeld für den Tragschrauberpilot 8 zu erweitern, weist das Armaturenbrett 9 zumindest ein Sichtfenster auf, das durch eine Aussparung 15 im Armaturenbrett 9 ausgebildet ist. Die Aussparung 15 erstreckt sich erfindungsgemäß ausgehend von der Oberseite 13 in Richtung Unterseite 14. Des Weiteren ist die Aussparung 15 in einem Mittenbereich des Armaturenbretts 9 angeordnet. Der Pilot 8 der Figur 1 kann somit durch die Aussparung 15 hindurch blicken, so dass er die Umgebung in kurzer Entfernung vor dem Tragschrauber 1 beobachten kann. Insbesondere kann durch die Aussparung 15 die Blickrichtung 10b entlang des Sichtwinkels β nicht mehr blockiert sein. Der Pilot 8 kann damit bis zum Sichtwinkel β unterhalb die Horizontale H durch die Aussparung 15 blicken.

Im vorliegenden Ausführungsbeispiel weist die Aussparung 15 an der Oberseite 13 des Armaturenbretts 9 eine obere Öffnung 23 auf.

Die Aussparung 15 weist eine Breite B auf, die maximal 15 cm betragen kann. Ferner weist die Aussparung 15 eine Tiefe T auf, die maximal 25 cm betragen kann. Die Tiefe T kann aber auch derart groß sein, dass ein Tragschrauberpilot 8 des 50. Perzentils in einer Seitensicht des Tragschraubers 1 ausgehend von seinem Augenpunkt 22 (vgl. Figur 1) gegenüber der sich durch den Augenpunkt 22 erstreckenden Horizontalen H den vertikalen Sichtwinkel β größer oder gleich 20° aufweist. Durch die Aussparung 15 ist die Blickrichtung 10b entlang des Sichtwinkels β nicht mehr blockiert. Der Pilot 8 kann damit auch noch unter dem Sichtwinkel β, der einen Winkel von 20° aufweisen kann, nach vorne vor den Tragschrauber 1 blicken. Der Pilot 8 kann zwischen dem Sichtwinkel α und dem Sichtwinkel β durch die Aussparung 15 hindurch blicken. Der Sichtwinkel β kann aber auch größer oder gleich 25° sein, so dass der Pilot 8 noch näher vor den Tragschrauber 1 blicken kann. Um noch näher vor den Tragschrauber 1 blicken zu können, kann der Sichtwinkel β aber auch größer oder gleich 30° betragen.

Durch die Aussparung 15 ist beispielsweise der Blickwinkel 10b der Figur 1 nicht mehr unterbrochen, so dass stattfindende Ereignisse vor dem Tragschrauber 1 erkannt werden können. Die Flugsicherheit des Tragschraubers 1 ist dadurch erhöht.

Das Armaturenbrett 9 weist ferner einen linken Teil 19 und einen rechten Teil 20 auf. Zwischen dem linken und dem rechten Teil 19, 20 ist ein Verbindungsteil 21 angeordnet. Die Aussparung 15 ist zwischen dem linken Teil 19 und dem rechten Teil 20 angeordnet. Gemäß dem vorliegenden Ausführungsbeispiel sind der linke Teil 19, das Verbindungsteil 21 und der rechte Teil 20 so angeordnet, dass das Armaturenbrett 9 eine U-Form aufweist.

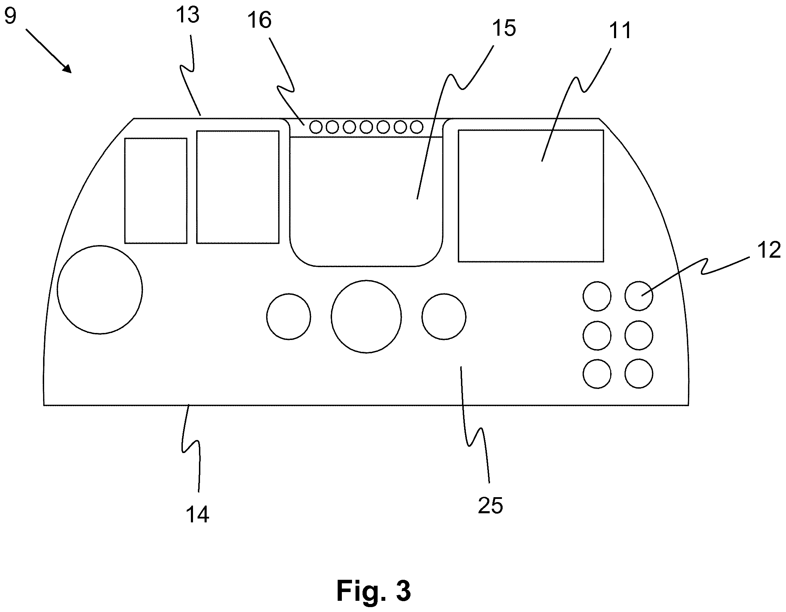

Figur 3 zeigt ein weiteres Ausführungsbeispiel des Armaturenbretts 9. Die Aussparung 15 ist hier von einer Versteifungsstrebe 16 zumindest teilweise umrandet. Die Versteifungsstrebe 16 begrenzt die Aussparung 15 an der Oberseite 13 des Armaturenbretts 9. Mit Hilfe der Versteifungsstrebe 16 kann das Armaturenbrett 9 stabiler ausgebildet werden. Wie im vorliegenden Ausführungsbeispiel gezeigt ist, kann die Versteifungsstrebe 16 auch Anzeigeeinheiten 11 und/oder Bedieneinheiten 12 aufweisen. Da der Pilot 8 durch die Aussparung 15 blicken kann, sind die Anzeigeeinheiten 11 und/oder die Bedieneinheiten 12 direkt im Blickfeld des Piloten 8. Wichtige Informationen über den Tragschrauber 1 und/oder des Fluges können so dem Piloten 8 zuverlässig mitgeteilt werden.

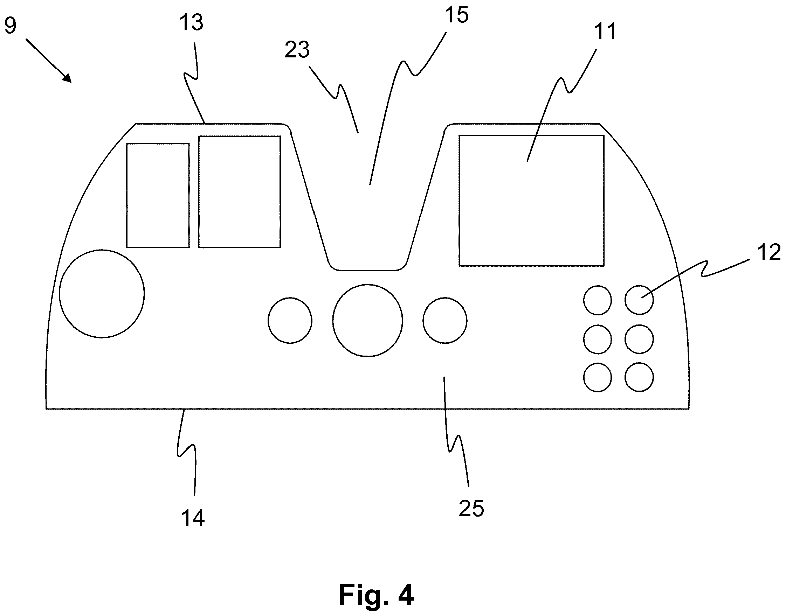

Figur 4 zeigt ein weiteres Ausführungsbeispiel eines Armaturenbretts 9. Hier verjüngt sich die Aussparung 15 von der Oberseite 13 in Richtung der Unterseite 14. Die Aussparung 15 kann sich konisch verjüngen. Die Aussparung 15 ist im vorliegenden Ausführungsbeispiel V-förmig ausgebildet.

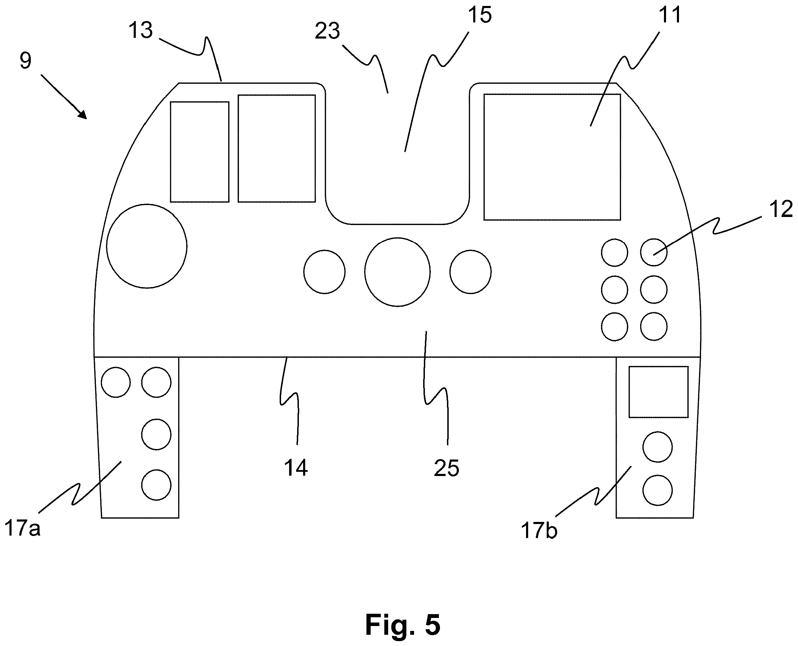

Figur 5 zeigt ein weiteres Ausführungsbeispiel des Armaturenbretts 9. Das Armaturenbrett 9 weist zumindest ein Erweiterungselement 17a, 17b auf, das Anzeigeeinheiten 11 und/oder Bedieneinheiten 12 umfassen kann. Im vorliegenden Ausführungsbeispiel weist das Armaturenbrett 9 zwei Erweiterungselemente 17a, 17b auf. Das zumindest eine Erweiterungselement 17a, 17b ist gemäß Figur 5 an der Unterseite 14 des Armaturenbretts 9 angeordnet. Das Erweiterungselement 17a, 17b kann beispielsweise klappbar an dem Armaturenbrett 9 angeordnet sein, so dass es zur Platzeinsparung eingeklappt werden kann. Das Erweiterungselement 17a, 17b kann auch lösbar mit dem Armaturenbrett 9 verbunden sein. Das Erweiterungselement 17a, 17b kann somit am Armaturenbrett 9 angeschlossen und bei Nichtbenutzung abgenommen werden. Das Armaturenbrett 9 weist dazu zumindest eine hier nicht gezeigte Schnittstelle auf, an der das Erweiterungselement 17a, 17b angeschlossen werden kann. Das Erweiterungselement 17a, 17b kann beispielsweise ein GPS-Gerät sein, das an das Armaturenbrett 9 angeschlossen werden kann.

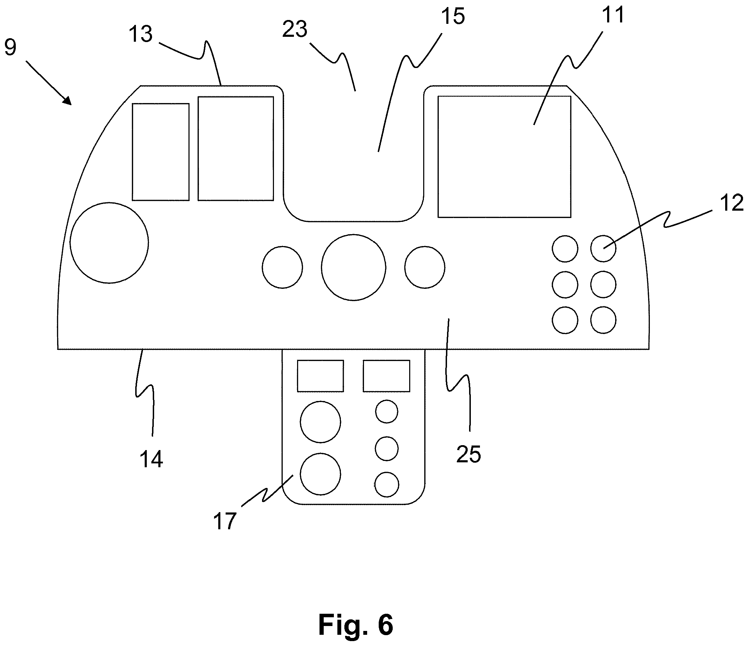

Figur 6 zeigt ein weiteres Ausführungsbeispiel des Armaturenbretts 9 mit einer mittig angeordneten Erweiterungseinheit 17. Die Erweiterungseinheit 17 ist in diesem Ausführungsbeispiel mittig an der Unterseite 14 des Armaturenbretts 9 angeordnet. Dadurch kann der Tragschrauberpilot 8 durch die Aussparung 15 nach vorne vor den Tragschrauber 1 blicken. Zusätzlich kann der Tragschrauberpilot 8 seitlich an der Erweiterungseinheit 17 vorbei nach schräg links und rechts vorne blicken. Vorteilhafterweise können die Aussparung 15 und die Erweiterungseinheit gemäß dem vorliegenden Ausführungsbeispiel auf einer Vertikalachse liegen. Die Aussparung 15 ist bei einem bestimmungsgemäßen Einbau des Armaturenbretts 9 in den Tragschrauber 1 über der Erweiterungseinheit 17 angeordnet. Dadurch ist ein freier Blick für den Tragschrauberpiloten 8 entweder durch die Aussparung 15 oder seitlich an der Erweiterungseinheit 17 vorbei gegeben.

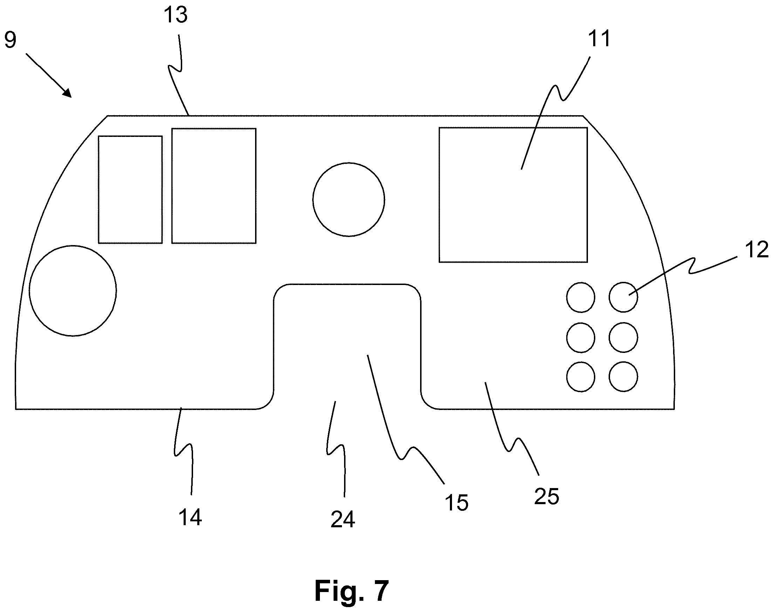

Figur 7 zeigt eine schematische Ansicht eines Armaturenbretts 9, das nicht in den Umfang der Ansprüche fällt, mit einer Aussparung 15, wobei diese an der Unterseite 14 angeordnet ist. Die Aussparung 15 erstreckt sich von der Unterseite 14 in Richtung der Oberseite 13. Mit einer derartigen Aussparung 15 kann der Pilot 8 steil nach unten vor den Tragschrauber 1 blicken. Dadurch kann beispielsweise ein Vorderrad des Tragschraubers 1 beobachtet werden und ob es beispielsweise durch einen Gegenstand blockiert ist.

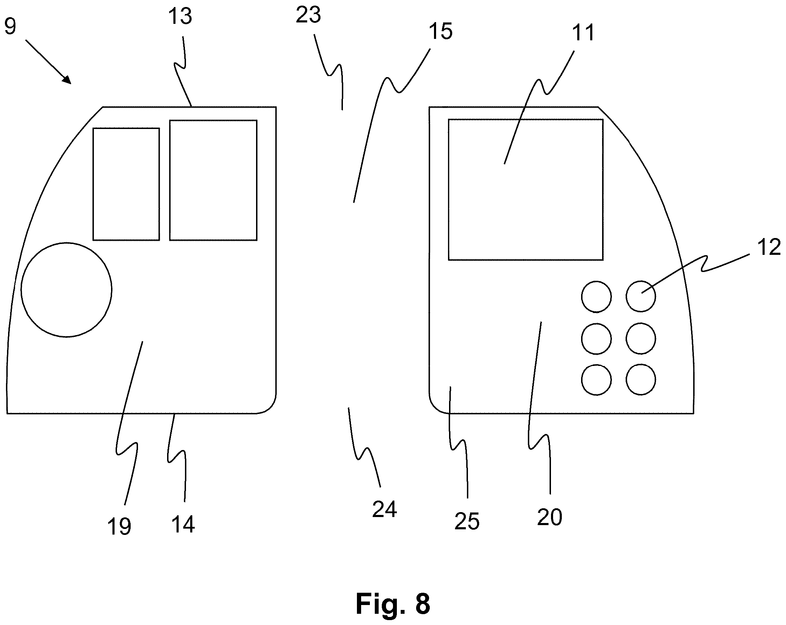

Figur 8 zeigt eine schematische Ansicht eines Armaturenbretts 9, das nicht in den Umfang der Ansprüche fällt, das zweigeteilt ist. Der linke Teil 19 ist vom rechten Teil 20 durch die Aussparung 15 getrennt. Die Aussparung 15 erstreckt sich vollständig von der oberen Öffnung 23 bis zur unteren Öffnung 24 durch das Armaturenbrett 9. Zusätzlich können der linke Teil 19 und der rechte Teil 20 des Armaturenbretts 9 mittels zumindest einer hier nicht gezeigten Versteifungsstrebe 16 miteinander verbunden sein.

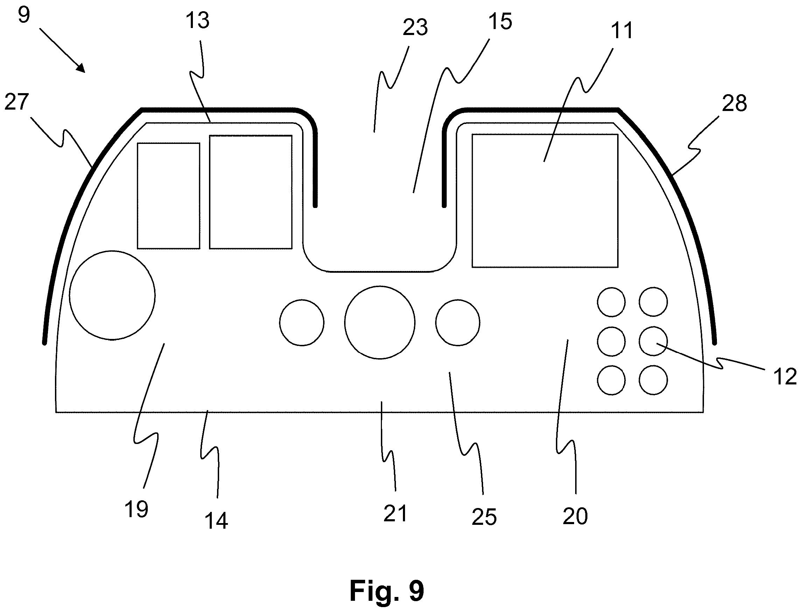

Figur 9 zeigt eine schematische Ansicht eines Armaturenbretts 9 mit zumindest einer Blendschutzvorrichtung 27, 28. Gemäß dem vorliegenden Ausführungsbeispiel weist das Armaturenbrett 9 zwei Blendschutzvorrichtungen 27, 28 auf. Die erste Blendschutzvorrichtung 27 ist dabei dem linken Teil 19 und die zweite Blendschutzvorrichtung 28 dem rechten Teil 20 zugeordnet. Die Blendschutzvorrichtungen 27, 28 sind hier schematisch dargestellt und können beispielsweise als Blenden ausgebildet sein. Die zumindest eine Blendschutzvorrichtung 27, 28 erstreckt sich zumindest abschnittsweise um das Armaturenbrett 9. Vom Armaturenbrett 9 erstreckt sich die zumindest eine Blendschutzvorrichtung 27, 28 weg. Insbesondere erstreckt sich die zumindest eine Blendschutzvorrichtung 27, 28 bei bestimmungsgemäßer Anordnung des Armaturenbretts 9 im Tragschrauber 1 (wie es beispielsweise in Figur 1 gezeigt ist) in Richtung des Pilotensitzes 18. Gemäß dem vorliegenden Ausführungsbeispiel erstreckt sich die zumindest eine Blendschutzvorrichtung 27, 28 ebenfalls in die Aussparung 15 hinein. Mit Hilfe der Blendschutzvorrichtung 27, 28 kann eine Sonneneinstrahlung auf die Anzeigeeinheit 11 und/oder Bedieneinheit 12 geblockt werden, so dass diese besser erkannt werden können. Insbesondere ist die zumindest eine Blendschutzvorrichtung 27, 28 derart angeordnet, dass ein Schatten auf die Anzeigeeinheit 11 und/oder die Bedieneinheit 12 fällt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Tragschrauber
- 2: Rumpf
- 3: Rotor
- 4: Propeller
- 5: Leitwerk
- 6: Strebe
- 7: Cockpit
- 8: Tragschrauberpilot
- 9: Armaturenbrett
- 10: Blickrichtung
- 11: Anzeigeeinheit
- 12: Bedieneinheit
- 13: Oberseite
- 14: Unterseite
- 15: Aussparung
- 16: Versteifungsstrebe
- 17: Erweiterungselement
- 18: Pilotensitz
- 19: linker Teil
- 20: rechter Teil
- 21: Verbindungsteil
- 22: Augenpunkt
- 23: obere Öffnung
- 24: untere Öffnung
- 25: Vorderseite
- 26: Rückseite
- 27: erste Blendschutzvorrichtung
- 28: zweite Blendschutzvorrichtung

- H: Horizontale
- α: Sichtwinkel
- β: Sichtwinkel
- T: Tiefe der Aussparung
- B: Breite der Aussparung

## Patentansprüche

1. Tragschrauber (1) mit
einem in Autorotation versetzbaren Rotor (3),
einem Armaturenbrett (9), das zumindest eine Anzeigeeinheit (11) und/oder zumindest eine Bedieneinheit (12) aufweist, wobei das Armaturenbrett (9) zumindest ein Sichtfenster zur Sichtfelderweiterung für einen Tragschrauberpiloten (8) aufweist, das durch eine im Armaturenbrett (9) ausgebildete Aussparung (15) ausgebildet ist, und einem vor dem Armaturenbrett (9) angeordneten Pilotensitz (18), wobei der Pilotensitz (18) in Querrichtung des Tragschraubers (1) zentral mittig vor dem Armaturenbrett (9) positioniert ist, wobei die Aussparung (15) in Querrichtung des Armaturenbrettes (9) in einem Mittenbereich, insbesondere zentral mittig, angeordnet ist, **dadurch gekennzeichnet, dass** sich die Aussparung (15) von der Oberseite (13) ausgehend nur teilweise in Richtung der Unterseite (14) erstreckt, so dass das Armaturenbrett (9) ein sich in Querrichtung des Armaturenbretts (9) erstreckendes Verbindungsteil (21) aufweist, das in der Vorderansicht einen linken und einen rechten Teil (19, 20) des Armaturenbretts (9) miteinander verbindet.

2. Tragschrauber nach Anspruch 1, **dadurch gekennzeichnet, dass** sich
die Aussparung (15) vollständig durch das Armaturenbrett (9) hindurcherstreckt und/oder
von einer die Anzeigeeinheit (11) und/oder Bedieneinheit (12) aufweisenden Vorderseite (25) des Armaturenbretts (9) bis zu einer gegenüberliegenden Rückseite (26) des Armaturenbretts (9) reicht.

3. Tragschrauber nach einem der vorherigen Ansprüche, **dadurch gekennzeichnet, dass** sich die Aussparung (15) von einer Oberseite (13) des Armaturenbretts (9) ausgehend in Richtung einer Unterseite (14) des Armaturenbretts (9) erstreckt und/oder
im Bereich der Oberseite (13) des Armaturenbretts (9) eine obere Öffnung (23) aufweist.

4. Tragschrauber nach einem der vorherigen Ansprüche, **dadurch gekennzeichnet, dass** das Armaturenbrett (9) in einer Vorderansicht eine U-Form aufweist.

5. Tragschrauber nach einem der vorherigen Ansprüche, **dadurch gekennzeichnet, dass** sich die Aussparung (15), insbesondere von der Vorderseite (25) in Richtung der Rückseite (26) oder von der Rückseite (26) in Richtung der Vorderseite (25) und/oder von der Oberseite (13) in Richtung der Unterseite (14), vorzugsweise konisch, verjüngt.

6. Tragschrauber nach einem der vorherigen Ansprüche, **dadurch gekennzeichnet, dass** die Aussparung (15) eine Breite (B) von maximal 15 cm und/oder eine Tiefe (T) von maximal 25 cm aufweist.

7. Tragschrauber nach Anspruch 3, **dadurch gekennzeichnet, dass** das Armaturenbrett (9) im Bereich der oberen Öffnung (23) eine sich zwischen dem linken und dem rechten Teil (19, 20) des Armaturenbretts (9) erstreckende Versteifungsstrebe (16) aufweist.

8. Tragschrauber nach einem der vorherigen Ansprüche 1 und/oder 7, **dadurch gekennzeichnet, dass** der Verbindungsteil (21) und/oder die Versteifungsstrebe (16) zumindest eine Anzeigeeinheit (11) und/oder zumindest eine Bedieneinheit (12) aufweisen.

9. Tragschrauber nach einem der vorherigen Ansprüche, **dadurch gekennzeichnet, dass** das Armaturenbrett (9) zumindest abschnittsweise zumindest eine Blendschutzvorrichtung (27, 28) aufweist.

10. Tragschrauber nach einem der vorherigen Ansprüche, **dadurch gekennzeichnet, dass** eine Tiefe (T) einer Aussparung (15) des Armaturenbretts (9) derart groß ist, dass ein Tragschrauberpilot (8) des 50. Perzentils in einer Seitenansicht des Tragschraubers (1) ausgehend von seinem Augenpunkt (22) gegenüber einer sich durch den Augenpunkt (22) erstreckenden Horizontalen (H) einen vertikalen Sichtwinkel (α, β) größer oder gleich 20°, vorzugsweise größer oder gleich 25°, besonders vorzugsweise größer oder gleich 30°, aufweist.

11. Tragschrauber nach einem der vorherigen Ansprüche, **dadurch gekennzeichnet, dass** neben und/oder hinter dem Pilotensitz (18) zumindest ein zusätzlicher Sitz angeordnet ist.

## Claims

1. An autogyro (1) comprising
a rotor (3) capable of being set into autorotation,
an instrument panel (9), which includes at least one display unit (11) and/or at least one control unit (12), wherein the instrument panel (9) comprises at least one viewing window for expanding the field of view for an autogyro pilot (8), which is formed by a recess (15) formed in the instrument panel (9), and
a pilot seat (18) arranged in front of the instrument panel (9),
wherein the pilot seat (18) is positioned centrally, in the transverse direction of the autogyro (1), in front of the instrument panel (9), wherein the recess (15) is arranged in a middle region, in particular centrally, in the transverse direction of the instrument panel (9) **characterized in that** the recess (15) extends, starting from the top side (13), only partially in the direction of the bottom side (14), so that the instrument panel (9) comprises a connecting part (21), which extends in the transverse direction of the instrument panel (9), connecting a left part (19) and a right part (20) - as viewed from the front - of the instrument panel (9) to one another.

2. The autogyro as claimed in claim 1, **characterized in that** the recess (15) extends completely through the instrument panel (9), and/or
extends from a front side (25) of the instrument panel (9) comprising the display unit (11) and/or control unit (12) to a diametrically opposed back side (26) of the instrument panel (9).

3. The autogyro as claimed in one of the preceding claims, **characterized in that** the recess (15) extends, starting from a top side (13) of the instrument panel (9), in the direction of a bottom side (14) of the instrument panel (9), and/or
comprises an upper opening (23) in the region of the top side (13) of the instrument panel (9).

4. The autogyro as claimed in one of the preceding claims, **characterized in that** the instrument panel (9) has a U-shape as viewed from the front.

5. The autogyro as claimed in one of the preceding claims, **characterized in that** the recess (15), preferably conically, tapers, in particular from the front side (25) in the direction of the back side (26) or from the back side (26) in the direction of the front side (25) and/or from the top side (13) in the direction of the bottom side (14).

6. The autogyro as claimed in one of the preceding claims, **characterized in that** the recess (15) has a width (B) of at most 15 cm and/or a depth (T) of at most 25 cm.

7. The autogyro as claimed in claim 3, **characterized in that** the instrument panel (9) comprises, in the region of the upper opening (23) a reinforcing strut (16) extending between the left part (19) and the right part (20) of the instrument panel (9).

8. The autogyro as claimed in one of the preceding claims 1 and/or 7, **characterized in that** the connecting part (21) and/or the reinforcing strut (16) comprise at least one display unit (11) and/or at least one control unit (12).

9. The autogyro as claimed in one of the preceding claims, **characterized in that** the instrument panel (9) comprises, at least in some areas, at least one anti-glare device (27, 28).

10. The autogyro as claimed in one of the preceding claims, **characterized in that** a depth (T) of a recess (15) of the instrument panel (9) is so great that an autogyro pilot (8) of the 50th percentile has, in a side view of the autogyro (1), a vertical viewing angle (α, β) greater than or equal to 20°, preferably greater than or equal to 25°, particularly preferably greater than or equal to 30°, starting from his/her viewing point (22) with respect to a horizontal (H) extending through the viewing point (22).

11. The autogyro as claimed in one of the preceding claims, **characterized in that** at least one additional seat is arranged next to and/or behind the pilot seat (18).

## Revendications

1. Autogyre (1) avec
un rotor (3) pouvant être mis en rotation automatique,
un tableau de bord (9) qui présente au moins une unité d'affichage (11) et/ou au moins une unité de commande (12), le tableau de bord (9) présentant au moins une fenêtre d'observation pour l'extension du champ optique pour un pilote d'autogyre (8) qui est formé par un évidement (15) formé dans le tableau de bord (9), et
un siège de pilote (18) disposé devant le tableau de bord (9), le siège de pilote (18) étant positionné dans la direction transversale de l'autogyre (1) au centre devant le tableau de bord (9), l'évidement (15) étant disposé dans la direction transversale du tableau de bord (9) dans une zone centrale, en particulier au centre, **caractérisé en ce que** l'évidement (15) s'étend à partir de la surface supérieure (13) seulement en partie en direction de la surface inférieure (14), de sorte que le tableau de bord (9) présente un élément d'assemblage (21) s'étendant dans la direction transversale du tableau de bord (9), qui assemble l'une à l'autre dans la vue frontale une partie gauche et une partie droite (19, 20) du tableau de bord (9).

2. Autogyre selon la revendication 1, **caractérisé en ce que** l'évidement (15) s'étend complètement à travers le tableau de bord (9) et/ou s'étend d'une face avant (25) du tableau de bord (9) présentant l'unité d'affichage (11) et/ou l'unité de commande (12) jusqu'à une face arrière opposée (26) du tableau de bord (9).

3. Autogyre selon l'une quelconque des revendications précédentes, **caractérisé en ce que** l'évidement (15) s'étend à partir d'une surface supérieure (13) du tableau de bord (9) en direction d'une surface inférieure (14) du tableau de bord (9) et/ou
présente une ouverture supérieure (23) dans la zone de la surface supérieure (13) du tableau de bord (9).

4. Autogyre selon l'une quelconque des revendications précédentes, **caractérisé en ce que** le tableau de bord (9) présente une forme en U dans une vue frontale.

5. Autogyre selon l'une quelconque des revendications précédentes, **caractérisé en ce que** l'évidement (15), en particulier de la face avant (25) en direction de la face arrière (26) ou de la face arrière (26) en direction de la face avant (25) et/ou de la surface supérieure (13) en direction de la surface inférieure (14), se rétrécit, de préférence de manière conique.

6. Autogyre selon l'une quelconque des revendications précédentes, **caractérisé en ce que** l'évidement (15) présente une largeur (B) de 15 cm au maximum et/ou une profondeur (T) de 25 cm au maximum.

7. Autogyre selon la revendication 3, **caractérisé en ce que** le tableau de bord (9) présente dans la zone de l'ouverture supérieure (23) une entretoise de renfort (16) s'étendant entre la partie gauche et la partie droite (19, 20) du tableau de bord (9).

8. Autogyre selon l'une quelconque des revendications précédentes 1 et/ou 7, **caractérisé en ce que** l'élément d'assemblage (21) et/ou l'entretoise de renfort (16) présente au moins une unité d'affichage (11) et/ou
au moins une unité de commande (12).

9. Autogyre selon l'une quelconque des revendications précédentes, **caractérisé en ce que** le tableau de bord (9) présente au moins par sections au moins un dispositif anti-éblouissement (27, 28).

10. Autogyre selon l'une quelconque des revendications précédentes, **caractérisé en ce qu'**une profondeur (T) d'un évidement (15) du tableau de bord (9) est si grande qu'un pilote d'autogyre (8) du 50ème percentile présente dans une vue latérale de l'autogyre (1) à partir de son point de vue (22) par rapport à une horizontale (H) s'étendant à travers le point de vue (22) un angle de vue vertical (a, β) supérieur ou égal à 20°, de préférence supérieur ou égal à 25°, de manière particulièrement préférée supérieur ou égal à 30°.

11. Autogyre selon l'une quelconque des revendications précédentes, **caractérisé en ce qu'**au moins un siège supplémentaire est disposé à côté et/ou derrière le siège de pilote (18).
